(19) Europäisches Patentamt
European Patent Office
Office européen des brevets

(11) **EP 1 650 284 B1**

(12) **EUROPEAN PATENT SPECIFICATION**

(45) Date of publication and mention of the grant of the patent:
**30.04.2008 Bulletin 2008/18**

(51) Int Cl.:
*C09K 19/18* (2006.01) *C09K 19/20* (2006.01)
*C09K 19/30* (2006.01) *C09K 19/32* (2006.01)
*C09K 19/54* (2006.01)

(21) Application number: **06000533.7**

(22) Date of filing: **08.02.2002**

(54) **Liquid crystal composition containing an optical active compound and liquid crystal electro-optical element**

Flüssigkristallzusammensetzung enthaltend optisch aktive Verbindung und flüssigkristallines elektrooptisches Element

Composition de cristaux liquides contenant un composé optiquement actif et élément électro-optique à cristaux liquides

(84) Designated Contracting States:
**DE FR GB**

(30) Priority: **08.02.2001 JP 2001032682**
**12.10.2001 JP 2001315739**
**07.12.2001 JP 2001373886**

(43) Date of publication of application:
**26.04.2006 Bulletin 2006/17**

(62) Document number(s) of the earlier application(s) in accordance with Art. 76 EPC:
**02711421.4 / 1 371 712**

(73) Proprietor: **Seimi Chemical Co., Ltd.**
**Chigasaki-city, Kanagawa 253-8585 (JP)**

(72) Inventors:
- **Yokokouji, Osamu,**
**Seimi Chemical Co., Ltd**
**Chigasaki-city**
**Kanagawa 253-8585 (JP)**
- **Tachibana, Tamon,**
**Seimi Chemical Co., Ltd**
**Chigasaki-city**
**Kanagawa 253-8585 (JP)**
- **Oiwa, Masaki,**
**Seimi Chemical Co., Ltd**
**Chigasaki-city**
**Kanagawa 253-8585 (JP)**
- **Shimizu, Kanetaka,**
**Seimi Chemical Co., Ltd**
**Chigasaki-city**
**Kanagawa 253-8585 (JP)**
- **Koike, Takeshi,**
**Seimi Chemical Co., Ltd**
**Chigasaki-city**
**Kanagawa 253-8585 (JP)**

(74) Representative: **Müller-Boré & Partner**
**Patentanwälte**
**Grafinger Strasse 2**
**81671 München (DE)**

(56) References cited:
**EP-A- 0 217 354** **EP-A- 0 311 329**
**EP-A- 0 315 193** **WO-A-95/14067**
**US-A- 5 209 867**

- **PATENT ABSTRACTS OF JAPAN vol. 017, no. 577 (C-1122), 20 October 1993 (1993-10-20) -& JP 05 170679 A (ASAHI GLASS CO LTD), 9 July 1993 (1993-07-09)**
- **PATENT ABSTRACTS OF JAPAN vol. 1997, no. 01, 31 January 1997 (1997-01-31) -& JP 08 245960 A (DAINIPPON INK & CHEM INC), 24 September 1996 (1996-09-24)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 650 284 B1

## Description

TECHNICAL FIELD

The present invention relates to a liquid crystal composition containing a novel optically active compound, and a liquid crystal electro-optical element employing the liquid crystal composition.

BACKGROUND ART

Liquid crystal electro-optical elements are used for various applications such as not only display devises for office automation equipment, but also measuring devices, automotive instruments, display devices for home electric appliance, clocks and desk-top calculators.

A liquid crystal electro-optical element has such a structure that a pair of substrates, at least one of the substrates having a transparent electrode, an intermediate protective film and a liquid crystal alignment film formed on its surface, is disposed with a certain distance, and a liquid crystal material is enclosed between the substrates, and it functions as an optical switching element by applying a voltage from the electrode to the liquid crystal material to change the alignment state of the liquid crystal material thereby to change its optical properties.

For twisted nematic (TN) and super twisted nematic (STN) liquid crystal electro-optical elements, a liquid crystal composition having a small amount of an optically active compound (chiral agent) added thereto is employed to achieve uniform twist alignment.

Optically active compounds widely used at present may, for example, be a compound of the following formula (CN), a compound of the following formula (CB-15) and a compound of the following formula (R-811). Further, a liquid crystal composition having an optically active compound added thereto is employed also for a reflective cholesteric (chiral nematic) liquid crystal element.

$C_6H_{13}$ $C_8H_{17}$ O O

CN

CN

CB-15

R-811

However, a cholesteric liquid crystal (chiral nematic liquid crystal) composition has a high viscosity, and thus it has such problems as a low speed of response and a high driving voltage, since a large amount of the optically active compound is added thereto. There is a corelation between the driving voltage of a liquid crystal element and the dielectric anisotropy ($\Delta\varepsilon$) of a liquid crystal composition, and a liquid crystal composition having a high dielectric anisotropy can be driven at a low driving voltage. In order to make a reflective cholesteric (chiral nematic) liquid crystal element be driven at a low voltage, an optically active compound having a high dielectric anisotropy as well as a nematic liquid crystal composition having a high dielectric anisotropy has been required.

The applicant has proposed an optically active compound having a low viscosity and a high helical twisting power in JP-A-11-255675. However, the helical twisting power of the optically active compounds as specifically disclosed in JP-A-11-255675 is insufficient particularly for a reflective cholesteric (chiral nematic) liquid crystal element, and thus a higher helical twisting power is required, and further, optically active compounds having a high dielectric anisotropy which have not been realized in JP-A-11-255675 are required.

The helical pitch length induced when an optically active compound is added to a liquid crystal composition is determined by the helical twisting power characteristic to the compound. The smaller the helical twisting power of an optically active compound, the longer the helical pitch length induced, and the addition amount has to be increased to shorten the helical pitch length. In general, if the addition amount of the optically active compound is increased, performances as a liquid crystal material tend to decrease, as compared with before addition and problems are caused such as an increase in the viscosity, a decrease in the speed of response, an increase in the driving voltage, a decrease in the isotropic phase transition temperature and a reduction of the temperature range at which a specific phase such as a nematic phase or a cholesteric phase is shown. Thus, an optically active compound having a high helical twisting power has been required.

In order to overcome such objects, JP-A-10-251185 proposes optically active compounds having a low viscosity and a high helical twisting power.

In recent years, attention has been paid to a reflective cholesteric liquid crystal element employing a cholesteric liquid crystal composition having a large amount (at a level of from 10 to 30 wt%) of an optically active compound added to a nematic liquid crystal composition, and utilizing such a phenomenon that the cholesteric liquid crystal selectively reflects light having a wavelength equal to the product of the average reflective index of the liquid crystal material and the helical pitch length. The reflective cholesteric liquid crystal element has a high efficiency of light since no deflecting plate or color filter is required, and a higher brightness can be obtained when a liquid crystal composition having a higher reflective index anisotropy ($\Delta n$) is employed. Further, a voltage has to be applied only when the changeover of display (writing) since the display state is maintained (memory properties), whereby the element consumes only a low electric power. However, since a large amount of an optically active compound is added, the cholesteric liquid crystal composition has a high viscosity, whereby there are problems such as a low speed of response and a high driving voltage. In order to overcome such problems, an optically active compound which has a helical twisting power higher than that of the optically active compounds as disclosed in JP-A-10-251185, and which provides an aimed helical pitch length even by addition in a small amount, has been required.

Further, many of practicable liquid crystal compositions are prepared by mixing at least one compound having a nematic phase in the vicinity of room temperature and at least one compound having a nematic phase in a temperature region higher than room temperature. Further, in recent years, along with diversification of products to which liquid crystal electro-optical elements are applied, a liquid crystal composition having an increased operating temperature range to the high temperature side has been required, and accordingly, particularly a liquid crystal composition having a high transition temperature from the liquid crystal phase to the isotropic phase [hereinafter referred to as clear point (Tc)] has been required.

Accordingly, an optically active compound which, when added to a liquid crystal composition, does not lower the clear point (Tc) of the liquid crystal composition has been required.

EP-A-0 311 329 describes optically active 1-(2-halogen-substituted-phenyl)-ethanols and derivatives thereof for use in liquid crystal compositions.

EP-A-0 315 193 describes an optically active compound and a chiral liquid crystal composition containing the same.

US-patent 5,209,867 describes novel derivatives of aromatic carboxylic acid esters which are useful as a dopant for liquid crystal compositions, and smectic liquid crystal compositions containing at least one of said derivatives.

EP-A-0 217 354 describes an optically active tolan derivative which is useful as an electro-optical display material.

JP-A-08-245960 describes a liquid crystal composition comprising a specific monofunctional polymerizable chiral monomer and an unpolymerizable nematic liquid crystal compound, wherein the liquid crystal composition is capable of regulating its intrinsic pitch within a wide range of temperatures.

WO-A-95/14067 describes a chiral nematic liquid crystalline composition comprising a glassy chiral nematic compound of low molar mass that includes a cycloaliphatic radical, a nematogenic moiety, and a chiral moiety, or a mixture of a nematic liquid crystalline compound of low molar mass that includes a cycloaliphatic radical and a nematogenic moiety and a chiral compound of low molar mass that includes a chiral moiety.

JP-05-170679 describes a monofluoroalkane derivative and a liquid crystal composition.

It is an object of the present invention to provide a liquid crystal composition which contains a novel optically active compound having a high helical twisting power, having a high dielectric anisotropy ($\Delta\varepsilon$) and providing excellent performances also as a chiral agent, and which can be driven at a low voltage, and a liquid crystal element employing the liquid crystal composition, particularly a STN or cholesteric (chiral nematic) liquid crystal element.

DISCLOSURE OF THE INVENTION

Under these circumstances, the present invention has been accomplished to overcome the above problems, and provides a liquid crystal composition containing at least an optically active compound of the following formula (1) (C* is asymmetric carbon):

$$R^1\text{-}A^1\text{-}C^{\ddagger}HX^1\text{-}Y^1\text{-}A^1\text{-}(Z^1\text{-}A^3)_m\text{-}C{\equiv}C\text{-}A^4\text{-}(Z^2\text{-}A^5)_n\text{-}R^2 \qquad (1)$$

wherein $A^1$ is a non-substituted 1,4-phenylene group, a 1,4-phenylene group substituted with at least one halogen atom or a non-substituted 2,6-naphthylene group,

each of $A^2$, $A^3$, $A^4$ and $A^5$ which are independent of one another, is a non-substituted 1,4-phenylene group, a 1,4-phenylene group substituted with at least one halogen atom or a non-substituted trans-1,4-cyclohexylene group,

each of $R^1$ and $R^2$ which are independent of each other, is a $C_{1\text{-}10}$ aliphatic hydrocarbon group, a $C_{1\text{-}10}$ aliphatic hydrocarbon group substituted with at least one halogen atom, a hydrogen atom, a halogen atom or a cyano group, provided that in a case of a $C_{1\text{-}10}$ aliphatic hydrocarbon group or a $C_{1\text{-}10}$ aliphatic hydrocarbon group substituted with at least one halogen atom, an ethereal oxygen atom (-O-) may be inserted in the carbon-carbon linkage in the group or the carbon-carbon linkage connecting the group and the ring,

$X^1$ is -F, $-CH_3$, $-CH_2F$, $-CHF_2$ or $-CF_3$,

$Y^1$ is $-CH_2$- or -CO-,

each of $Z^1$ and $Z^2$ which are independent of each other, is -COO-, -OCO-, $-CH_2O$-, $-OCH_2$-, $-CH_2CH_2$-, -C=C-, -CF=CF- or a single bond, and

each of m and n which are independent of each other, is 0 or 1 .

BEST MODE FOR CARRYING OUT THE INVENTION

Explanation regarding the optically active compound of the above formula (1)

The optically active compounds of the formula (1) are acetylene derivative type liquid crystalline compounds and at the same time, are useful as an optically active compound to be added to a liquid crystal composition. Namely, they have a high helical twisting power and provide a short helical pitch length induced and at the same time, they have a high $\Delta n$, an extremely high Tc and further a low viscosity. Further, they are chemically stable, and are excellent in compatibility with another compound such as another liquid crystal or non-liquid crystal compound.

Accordingly, the addition amount of the optically active acetylene derivative compound is small when it is added to a liquid crystal composition, and thus substantially no increase in the viscosity, decrease in the speed of response, increase in the driving voltage or reduction of the operating temperature range will be caused. At the same time, substantially no decrease in Tc of the liquid crystal composition will be caused, and accordingly a liquid crystal electro-optical element can be driven even at a high temperature range. Particularly, such an optically active acetylene derivative compound having the above properties is extremely effective when used for a cholesteric liquid crystal composition to which addition of a large amount of an optically active compound is required, and which is usually considered to have

a low speed of response and a high driving voltage, and a liquid crystal display element having brightness and a high contrast can be obtained.

Among the optically active acetylene derivative compounds of the above formula (1), the following compounds are preferred. In each formula, a carbon atom with a symbol * represents asymmetric carbon, and its absolute configuration may be either R or S. $R^1$, $R^2$, $X^1$, $Y^1$, $Z^1$ and $Z^2$ are as defined for the formula (1). The steric configuration of the 1,4-cyclohexylene group in each formula is trans-form.

The symbol (Hal) in each formula represents that the compound is not substituted or substituted with at least one halogen atom, and in a case where the compound is substituted with at least two halogen atoms, these halogen atoms may be the same or different. In order to represent the substituted position in a case where the compound is substituted with at least one halogen atom, the substituted position is defined as follows for convenience sake.

$A^1$ $A^2$ $A^3$ $A^4$ $A^5$

Examples of a tricyclic compound having three rings of the present invention are as follows. Here, a 2,6-naphthylene group is counted as one ring.

Examples of a tetracyclic compound having four rings of the present invention are as follows.

Examples of a pentacyclic compound having five rings of the present invention are as follows.

These compounds of the present invention have a high helical twisting power and at the same time, have a high $\Delta n$, an extremely high Tc and a low viscosity. Further, they are chemically stable, and are excellent in compatibility with another compound such as another liquid crystal or non-liquid crystal compound.

Among the optically active acetylene derivative compounds of the present invention, particularly tricyclic ones have a low viscosity even though they have a high Tc, and can be used for a liquid crystal composition which increases the speed of response of a liquid crystal electro-optical element, and tetracyclic and pentacyclic ones have an extremely high Tc, and can be used for a liquid crystal composition having a high upper limit of temperature at which a liquid crystal electro-optical element is used.

In a case of producing a liquid crystal composition having a particularly high positive dielectric anisotropy so as to decrease the driving voltage of a liquid crystal electro-optical element, a compound having a high dielectric anisotropy is employed. Such an object can be achieved by the compound of the present invention wherein either one of $R^1$ and $R^2$ is a halogen atom or a cyano group, and/or $A^1$, $A^2$, $A^3$, $A^4$ and/or $A^5$ is a 1,4-phenylene group substituted with one or two halogen atom(s). In such a case, in a case where $R^1$ is a halogen atom or a cyano group, $A^1$, $A^2$, $A^3$, $A^4$ and/or $A^5$ is preferably a 1,4-phenylene group substituted with a halogen atom at the 2-and/or 6-position(s), and in a case where $R^2$ is a halogen atom or a cyano group, $A^1$, $A^2$, $A^3$, $A^4$ and/or $A^5$ is preferably a 1,4-phenylene group substituted with a halogen atom at the 3- and/or 5-position(s).

For a liquid crystal composition employed for a liquid crystal optical element which is driven by application of an electric field in parallel with the long axis direction of molecules of a liquid crystalline compound, a liquid crystal compound having a negative dielectric anisotropy is employed. Such a liquid crystal compound having a negative dielectric anisotropy can be achieved by the compound of the present invention wherein $A^1$, $A^2$, $A^3$, $A^4$ and/or $A^5$ is a 1,4-phenylene group substituted with one or two halogen atom(s) at the 2-and/or 3-position(s).

For a liquid crystal electro-optical element, various types of liquid crystal compounds are mixed and used. Thus, the liquid crystalline compound is required to have favorable compatibility with another liquid crystalline compound. The compounds of the present invention are excellent in compatibility with another compound such as another liquid crystal or non-liquid crystal compound, and a compound wherein $A^1$, $A^2$, $A^3$, $A^4$ and/or $A^5$ is a 1,4-phenylene group substituted with a halogen atom has a particularly improved compatibility. In this case, preferred is a compound wherein $A^2$ and/or $A^3$ is a 1,4-phenylene group substituted with at least one halogen atom at the 3- and/or 5- position(s), or $A^4$ and/or $A^5$ is a 1,4-phenylene group substituted with at least one halogen atom at the 2- and/or 6-position(s), which has a low viscosity.

The helical pitch length induced when an optically active compound is added to a liquid crystal composition is determined by the helical twisting power characteristic to the compound. Thus, in addition to reduce the addition amount, a high helical twisting power is required. The compounds of the present invention have a high helical twisting power, and the helical twisting power becomes higher when $A^1$ and/or $A^2$ is a 1,4-phenylene group substituted with at least one halogen atom. In such a case, $A^1$ is preferably a 1,4-phenylene group substituted with at least halogen atom at the 3- and/or 5-position(s), and $A^2$ is preferably a 1,4-phenylene group substituted with at least one halogen atom at the 2- and/or 6-position(s).

In a case where $A^1$, $A^2$, $A^3$, $A^4$ and/or $A^5$ is substituted with at least one halogen atom, the halogen atom is preferably a chlorine atom and/or a fluorine atom, particularly preferably from 1 to 3 fluorine atom(s).

The halogen atom as each of $R^1$ and $R^2$ is preferably a chlorine atom, a bromine atom or a fluorine atom, particularly preferably a chlorine atom or a fluorine atom.

The $C_{1-10}$ aliphatic hydrocarbon group as each of $R^1$ and $R^2$ may have either linear structure or branched structure. The aliphatic hydrocarbon group is preferably an alkyl group, an alkenyl group or an alkynyl group. The $C_{1-10}$ alkyl group may, for example, be a methyl group, an ethyl group, a propyl group, a butyl group, a pentyl group, a hexyl group, a heptyl group, an octyl group, a nonyl group, a decyl group, an isobutyl group or a 1-methyl-heptyl group. In a

case of a $C_{2-10}$ alkenyl group, the carbon-carbon double bond in the group is preferably a trans bond, and particularly preferred is a 3-butenyl group or a 3-trans-pentenyl group. The $C_{1-10}$ aliphatic hydrocarbon group substituted with at least one halogen atom is a group having at least one hydrogen atom in the above aliphatic hydrocarbon group substituted with a halogen atom. The halogen atom is preferably a chlorine atom or a fluorine atom, particularly preferably a fluorine atom.

In a case where each of $R^1$ and $R^2$ is a $C_{1-10}$ aliphatic hydrocarbon group or a $C_{1-10}$ aliphatic hydrocarbon group substituted with at least one halogen atom, an ethereal oxygen atom (-O-) may be inserted in the carbon-carbon linkage in the group or in the carbon-carbon linkage connecting the group and the ring. The group having an ethereal oxygen atom and/or an ester linkage inserted thereinto may, for example, be an alkoxy group, an alkoxyalkyl group, an alkoxyalkoxy group, a fluoroalkoxy group, a fluoroalkoxyalkyl group, a perfluoroalkoxyalkyl group, an alkoxycarbonyl group or an alkyl carbonyloxy group.

The alkoxy group may, for example, be a methoxy group, an ethoxy group, a propoxy group, a butoxy group, a pentyloxy group, a hexyloxy group, a heptyloxy group, an octyloxy group, a nonyloxy group, a decyloxy group, an isobutoxy group or a 1-methyl-heptyloxy group. The alkoxyalkyl group may, for example, be a 2-methoxyethyl group, a 2-ethoxyethyl group, a 2-propoxyethyl group, a 2-butoxyethyl group, a 2-pentyloxyethyl group, a 2-isobutoxyethyl group, a 2-(1-methyl-heptyloxy)ethyl group, a 4-methoxybutyl group, a 4-ethoxybutyl group, a 4-propoxybutyl group, a 4-butoxybutyl group or a 4-pentyloxybutyl group. The alkoxyalkoxy group may, for example, be a 2-methoxyethoxy group, a 2-ethoxyethoxy group, a 2-propoxyethoxy group, a 2-butoxyethoxy group, a 2-pentyloxyethoxy group, a 2-isobutoxyethoxy group, a 2-(1-methyl-heptyloxy)ethoxy group, a 4-methoxybutoxy group, a 4-ethoxybutoxy group, a 4-propoxybutoxy group, a 4-butoxybutoxy group or a 4-pentyloxybutoxy group.

In a case where the $C_{1-10}$ aliphatic hydrocarbon group or the $C_{1-10}$ aliphatic hydrocarbon group substituted with at least one halogen atom has a branched structure, an asymmetric carbon atom may be contained in such a group, and the asymmetric carbon atom preferably has e.g. a fluorine atom, a chlorine atom, a methyl group or a trifluoromethyl group bonded thereto.

$R^1$ is preferably a hydrogen atom in view of availability of the material. $X^1$ is preferably -F, $-CH_3$ or $-CF_3$ in view of easiness of production. $Y^1$ is $-CH_2-$ or -CO- in view of a high helical twisting power. Each of $Z^1$ and $Z^2$ which are independent of each other, is preferably -COO-, -OCO-, $-CH_2CH_2-$, - C=C-, -CF=CF- or a single bond.

In a case where a liquid crystal composition is formed by employing the optically active acetylene derivative compound of the present invention, usually at least one type thereof is incorporated in another liquid crystal compound and/or non-liquid crystal compound (hereinafter sometimes another liquid crystal compound and non-liquid crystal compound will generically be referred to as another compound). In such a case, the amount of the optically active acetylene derivative compound of the present invention in the liquid crystal composition optionally varies depending upon e.g. the application, the purpose of use and the type of another compound, but in a usual case, it is preferably from about 0.1 to about 50 parts by mass, particularly preferably from 0.1 to 20 parts by mass in 100 parts by mass of the liquid crystal composition.

Another compound for formation of the above liquid crystal composition optionally varies depending upon the application or characteristics required, but usually preferred is one comprising a liquid crystal compound and a component having a structure similar to the liquid crystal compound as the main components and an additive component as the case requires.

As another compound to be contained in the liquid crystal composition containing the optically active acetylene derivative compound of the present invention, the following examples may be mentioned. In the following formulae, Ph represents a 1,4-phenylene group, Cy represents a trans-1,4-cyclohexylene group, $PhF_2CN$ represents a 3,5-difluoro-4-cyanophenyl group, and each of $R^3$ and $R^4$ represents a group such as an alkyl group, an alkenyl group, an alkynyl group, an alkoxy group, a halogen atom or a cyano group. $R^3$ and $R^4$ may be the same or different. $X^1$ represents F or a methyl group.

$R^3$-Cy-Cy-$R^4$

$R^3$-Cy-Ph-$R^4$

$R^3$-Cy-$PhF_2CN$

$R^3$-Ph-Ph-$R^4$

$R^3$-Ph-C≡C-Ph-$R^4$

$R^3$-Cy-COO-Ph-$R^4$

$R^3$-Cy-COO-Ph $F_2CN$

$R^3$-Ph-COO-Ph-$R^4$

$R^3$-Ph-COO-Ph$F_2$CN

$R^3$-Cy-CH=CH-Ph-$R^4$

$R^3$-Ph-CH=CH-Ph-$R^4$

$R^3$-Ph-CF=CF-Ph-$R^4$

$R^3$-Cy-CF=CF-Ph-$R^4$

$R^3$-Cy-CF=CF-Cy-$R^4$

$R^3$-Cy-Ph-CF=CF-Ph-$R^4$

$R^3$-Cy-Ph-CF=CF-Cy-$R^4$

$R^3$-Ph-Cy-CF=CF-Cy-$R^4$

$R^3$-Cy-Cy-CF=CF-Ph-$R^4$

$R^3$-Ph-Ph-CF=CF-Ph-$R^4$

$R^3$-Cy-$CH_2CH_2$Ph-$R^4$

$R^3$-Cy-Ph-$CH_2CH_2$-Ph-$R^4$

$R^3$-Cy-Ph-$CH_2CH_2$-Cy-$R^4$

$R^3$-Cy-Cy-$CH_2CH_2$-Ph-$R^4$

$R^3$-Ph-$CH_2CH_2$-Ph-$R^4$

$R^3$-Ph-Ph-$CH_2CH_2$-Ph-$R^4$

$R^3$-Ph-Ph-$CH_2CH_2$-Cy-$R^4$

$R^3$-Cy-Ph-Ph-$R^4$

$R^3$-Cy-Ph-Ph$F_2$CN

$R^3$-Cy-Ph-C≡C-Ph-$R^4$

$R^3$-Cy-Ph-C≡C-Ph$F_2$CN

$R^3$-Cy-Ph-C≡C-Ph-Cy-$R^4$

$R^3$-Cy-$CH_2CH_2$-Ph-C≡C-Ph-$R^4$

$R^3$-Cy-$CH_2CH_2$-Ph-C≡C-Ph-Cy-$R^4$

$R^3$-Cy-Ph-Ph-Cy-$R^4$

$R^3$-Ph-Ph-Ph-$R^4$

$R^3$-Ph-Ph-C≡C-Ph-$R^4$

$R^3$-Ph-$CH_2CH_2$-Ph-C≡C-Ph-$R^4$

$R^3$-Ph-$CH_2CH_2$-Ph-C≡C-Ph-Cy-$R^4$

$R^3$-Cy-COO-Ph-Ph-$R^4$

$R^3$-Cy-COO-Ph-$PhF_2CN$

$R^3$-Cy-Ph-COO-Ph-$R^4$

$R^3$-Cy-Ph-COO-$PhF_2CN$

$R^3$-Cy-COO-Ph-COO-Ph-$R^4$

$R^3$-Cy-COO-Ph-COO-$PhF_2CN$

$R^3$-Ph-COO-Ph-COO-Ph-$R^4$

$R^3$-Ph-COO-Ph-OCO-Ph-$R^4$

$R^3$-Cy-$CH_2CH_2$-$PhF_2CN$

$R^3$-Ph-$CH_2CH_2$-$PhF_2CN$

$R^3$-Ph-Cy-$CH_2CH_2$-$PhF_2CN$

$R^3$-Cy-Ph-$CH_2CH_2$-$PhF_2CN$

$R^3$-Cy-Cy-$CH_2CH_2$-$PhF_2CN$

$R^3$-Ph-C‡H$X^1$-$CH_2$-Ph-$R^4$

$R^3$-Ph-C‡H$X^1$-$CH_2$-Cy-$R^4$

$R^3$-Ph-C‡H$X^1$-$CH_2$-Ph-Cy-$R^4$

$R^3$-Ph-C‡H$X^1$-$CH_2$-Cy-Ph-$R^4$

$R^3$-Ph-C‡H$X^1$-$CH_2$-Ph-Ph-$R^4$

These compounds are mentioned as examples, and a hydrogen atom present in the ring structure or the terminal group of these compounds may be substituted with e.g. a halogen atom, a cyano group or a methyl group. Further, the cyclohexane ring or the benzene ring may be changed to another 6-membered ring or a 5-membered ring such as a pyrimidine ring or a dioxane ring, and the binding group between rings may be changed to another bivalent binding group, and various compounds may be selected depending upon the desired performances. Further, as the optically active acetylene derivative compounds of the present invention are compounds excellent in compatibility with another compound, their concentration in the liquid crystal composition can be freely adjusted from the low concentration to the high concentration.

The liquid crystal composition containing the optically active acetylene derivative compound of the present invention is sandwiched between substrates provided with an electrode by e.g. injection into a liquid crystal cell, and may be employed as a liquid crystal electro-optical element of various modes such as twisted nematic mode, guest/host mode, dynamic scattering mode, phase change mode, DAP mode, two-frequency driving mode, ferroelectric liquid crystal display mode and reflective cholesteric liquid crystal display mode.

As a process for producing the liquid crystal electro-optical element, preferably the following process may be mentioned. Namely, on a substrate of e.g. plastic or glass, an undercoat layer of e.g. $SiO_2$ or $Al_2O_3$ or a color filter layer is formed as the case requires, an electrode of e.g. $In_2O_3$-$SnO_2$ (ITO) or $SnO_2$ is formed thereon, followed by patterning,

and then an overcoat layer of e.g. polyimide, polyamide, $SiO_2$ or $Al_2O_3$ is formed thereon as the case requires, followed by alignment treatment, and a sealing material is printed thereon, and such substrated are disposed so that the electrode sides face each other and the periphery is sealed, and the sealing material is cured to form an empty cell.

To this empty cell, the liquid crystal composition containing the optically active acetylene derivative compound of the present invention is injected, and the inlet is sealed with a sealing compound to constitute a liquid crystal cell. On this liquid crystal cell, as the case requires, e.g. a deflecting plate, a color deflecting plate, a light source, a color filter, a semipermeable reflecting plate, a reflecting plate, an optical waveguide or an ultraviolet cut filter is laminated, e.g. characters or figures are printed, or a nonglare treatment is carried out as the case requires.

The optically active acetylene derivative compounds of the present invention can easily be produced industrially preferably in accordance with the following process.

First, the compound (1) wherein when m=0, each of $A^2$ and $A^4$ is a non-substituted 1,4-phenylene group or a 1,4-phenylene group substituted with at least one halogen atom, or the compound (1) wherein when m=1, each of $A^3$ and $A^4$ which are independent of each other, is a non-substituted 1,4-phenylene group or a 1,4-phenylene group substituted with at least one halogen atom, may be produced in accordance with the following process.

$R^1$-$A^1$-C‡H$X^1$-$Y^1$-$A^2$-($Z^1$-$A^3$)$_m$-$C_1$ (1-2)

↓ 1) Mg, E tMgB r/THF

↓ 2) $I_2$/THF

$R^1$-$A^1$-C‡H$X^1$-$Y^1$-$A^2$-($Z^1$-$A^3$)$_m$-I (1-3)

↓ HC≡C-$A^4$-($Z^2$-$A^5$)$_n$-$R^2$ (1-4)

↓ Pd ($PPh_3$)$_4$, Cu I/$Et_3$N

$R^1$-$A^1$-C‡H$X^1$-$Y^1$-$A^2$-($Z^1$-$A^3$)$_m$-C≡C-$A^4$-($Z^2$-$A^5$)$_n$-$R^2$ (1)

Namely, a compound of the formula (1-2) produced by a method as disclosed in JP-A-10-251185 or JP-A-11-255675 is formed into a Grignard reagent with magnesium in the presence of ethyl magnesium bromide. Then, iodine is acted thereon to obtain a compound of the formula (1-3). The obtained compound of the formula (1-3) is reacted with a compound of the formula (1-4) in triethylamine in the presence of tetrakis(triphenylphosphine)palladium and copper (I) iodide to obtain the optically active acetylene derivative compound.

The compound of the formula (1-4) may be produced, for example, by the following process.

I-$A^4$-($Z^2$-$A^5$)$_n$-$R^2$ (1-5)

↓ HO ($CH_3$) $_2$CC≡CH

↓ Pd ($PPh_3$)$_4$, Cu I/$Et_3$N

HO ($CH_3$) $_2$CC≡C-$A^4$-($Z^2$-$A^5$)$_n$-$R^2$ (1-6)

↓ NaH/E $t_3$N

HC≡C-$A^4$-($Z^2$-$A^5$)$_n$-$R^2$ (1-4)

Namely, a compound of the formula (1-5) is reacted with 3-methyl-l-butyn-3-ol in triethylamine in the presence of tetrakis(triphenylphosphine)palladium and copper(I) iodide to obtain a compound of the formula (1-6). Sodium hydride is acted on the obtained compound of the formula (1-6) in triethylamine to obtain the compound of the formula (1-4).

The compounds of the present invention can also be produced easily in accordance with the following process.

$R^1$-$A^2$-C‡H$X^1$-$Y^1$-$A^2$-($Z^1$-$A^3$)$_m$-Br (1-2')

↓ HC≡C-$A^4$-($Z^2$-$A^5$)$_n$-$R^2$ (1-4)

↓ Pd ($PPh_3$) $_4$, Cu I/E $t_3$N

$$R^1\text{-}A^1\text{-}C^{\ddagger}HX^1\text{-}Y^1\text{-}A^2\text{-}(Z^1\text{-}A^3)_m\text{-}C{\equiv}C\text{-}A^4\text{-}(Z^2\text{-}A^5)_n\text{-}R^2 \qquad (1)$$

Namely, a compound of the formula (1-2') is reacted with the compound of the formula (4) in triethylamine in the presence of tetrakis(triphenylphosphine)palladium and copper(I) iodide to obtain the compound of the present invention.

The compound (1) wherein when m=0, $A^2$ and/or $A^4$ is a trans-1,4-cyclohexylene group, or the compound of the formula (1) wherein when m=1, $A^3$ and/or $A^4$ is a trans-1,4-cyclohexylene group, may easily be produced preferably in accordance with the following process.

$$R^1\text{-}A^1\text{-}C^{\ddagger}HX^1\text{-}Y^1\text{-}A^2\text{-}(Z^1\text{-}A^3)_m\text{-}CHBr\text{-}PPh_3Br \qquad (1\text{-}7)$$

$$\downarrow OHC\text{-}A^4\text{-}(Z^2\text{-}A^5)_n\text{-}R^2 \cdots (1\text{-}8)\ /t\text{-}BuOK$$

$$R^1\text{-}A^1\text{-}C^{\ddagger}HX^1\text{-}Y^1\text{-}A^2\text{-}(Z^1\text{-}A^3)_m\text{-}CB\ r{=}CH\text{-}A^4\text{-}(Z^2\text{-}A^5)_n\text{-}R^2 \qquad (1\text{-}9)$$

$$\downarrow t\text{-}BuOK$$

$$R^1\text{-}A^1\text{-}C^{\ddagger}HX^1\text{-}Y^1\text{-}A^2\text{-}(Z^1\text{-}A^3)_m\text{-}C{\equiv}C\text{-}A^4\text{-}(Z^2\text{-}A^5)_n\text{-}R^2 \qquad (1)$$

Namely, a phosphonium salt of the formula (1-7) and an aldehyde of the formula (1-8) are reacted in a proper solvent in the presence of a base such as potassium t-butoxide to obtain a vinyl halide derivative of the formula (1-9). The obtained compound of the formula (1-8) is subjected to a dehydrohalogenation reaction in a proper solvent in the presence of a base such as potassium t-butoxide to obtain the optically active acetylene derivative compound.

Needless to say, these production processes are mentioned as examples, and other various production processes can also be employed.

Now, the present invention will be explained more specifically with reference to Examples.

EXAMPLE 1-1

Preparation of (R)-1-[4-[2-(4-chloro-2-fluorophenyl)ethinyl]phenyl]-2-phenylpropane

35 ml of tetrahydrofuran (THF) was added to 11.6 g (0.48 mol) of magnesium, and a solution having 23.6 g (0.22 mol) of ethyl bromide dissolved in 70 ml of THF was dropwise added thereto over a period of 1 hour at room temperature with stirring, followed by stirring for 1 hour. A solution having 50.0 g (0.22 mol) of (R)-2-phenyl-1-(4-chlorophenyl)propane dissolved in 50 ml of THF was dropwise added thereto over a period of 30 minutes at room temperature, followed by stirring under reflux for 5 hours. After the mixture was cooled to room temperature, 250 ml of THF was added thereto, and the mixture was further cooled to -30°C. A solution having 112 g (0.44 mol) of iodine dissolved in 300 ml of THF was dropwise added thereto at -30°C over a period of 30 minutes, followed by stirring for 1 hour. The temperature was raised to 0°C, and 120 ml of 4M hydrochloric acid was dropwise added thereto, followed by stirring for 10 minutes. After extraction with toluene from the reaction liquid, washing with water and drying were carried out to obtain 69.8 g of (R)-2-phenyl-1-(4-iodophenyl)propane (GC purity: 95.2%, 0.22 mol).

Then, 32.5 g (0.21 mol) of 2-fluoro-4-chlorophenylacetylene and 69.8 g of the above prepared (R)-2-phenyl-1-(4-iodophenyl)propane (GC purity: 95.2%, 0.22 mol) were dissolved in 380 ml of triethylamine, and 4.85 g (4.2 mmol) of tetrakis(triphenylphosphine)palladium and 1.2 g (6.3 mmol) of iron(II) iodide were added thereto, followed by stirring at 80°C for 2 hours.

Then, 3L of water was added to the reaction liquid, and after extraction with toluene, washing with water and

drying were carried out, purification by silica gel column chromatography was carried out, and recrystallization from ethanol was carried out twice to obtain 46.8 g (0.13 mol) of aimed (R)-1-[4-[2-(4-chloro-2-fluorophenyl)ethinyl]phenyl]-2-phenylpropane.

Melting point: 62.1°C

$^1$H-NMR($CDCl_3$, TMS): δ 1.19(d, 3H, J=6.6 Hz, -$CH_3$), 2.68 - 2.95(m, 3H, Benzylic-H), 6.92 - 7.35(m, 12H, Aromatic-H)

$^{19}$F-NMR($CDCl_3$, $CFCl_3$) : δ -107.60 - -107.66(m)

The following compounds were obtained by a similar process.

Melting point: 86.5°C

$^1$H-NMR($CDCl_3$, TMS): δ 0.89(d, 6H, J=6.6 Hz, iBu's-$CH_3$×2), 1.23(d, 3H, J=6.6 Hz, -$CH_3$), 1.84(tq, 1H, J=7.1 Hz, 6.6 Hz, iBu's=CH-), 2.43(d, 2H, J=7.1 Hz, iBu's-$CH_2$-), 2.73 - 3.00(m, 3H, Benzylic-H), 7.01 - 7.45(m, 11H, Aromatic-H)

$^{19}$F-NMR($CDCl_3$, $CFCl_3$) : δ -107.92 - -107.95(m)

Melting point: 60.6°C

$^1$H-NMR($CDCl_3$, TMS): δ 1.19(d, 3H, J=6.2 Hz, -$CH_3$), 2.69 - 2.96(m, 3H, Benzylic-H), 6.93 - 7.29(m, 12H, Aromatic-H)

$^{19}$F-NMR ($CDCl_3$, $CFCl_3$) : δ -136.47 (m, 1F), -137.46 (m, 1F)

Further, the following compounds are obtained by a process similar to the above.

F

C≡C O

C≡C Cl

F C≡C Cl

C≡C F

F C≡C F

C≡C

F C≡C

C≡C

F C≡C

C≡C O

F C≡C O

C≡C CN

F C≡C Cl

F C≡C CN

F C≡C F

F C≡C CN F

F C≡C

F C≡C

F C≡C

F C≡C

F C≡C O

MeO C•C F Cl

MeO C•C F

MeO F C•C F

MeO C•C

MeO F C•C

MeO C•C

MeO F C•C

MeO C•C O

MeO F C•C O

MeO C•C F Cl

MeO F C•C Cl

MeO C•C F F

MeO F C•C F

MeO C•C F

MeO F C•C

MeO C•C F

MeO F C•C

MeO C•C F O

MeO F C•C O

MeO C•C F Cl

MeO C•C F F

F
C≡C
Cl
F
O

F F F F F
C≡C C≡C C≡C O
F F

F F F F
C≡C C≡C C≡C Cl
F F

F F F F F
C≡C O C≡C C≡C F
F F

F F F F
C≡C Cl C≡C Cl C≡C
F

F F F F
C≡C F C≡C F C≡C
F

F F F F
C≡C C≡C C≡C O
F

F F F
C≡C C≡C
F

F F F
C≡C O C≡C O
F

F F F
C≡C Cl C≡C Cl
F

F F F
C≡C F C≡C F
F

F F F
C≡C C≡C
F

F F F
C≡C C≡C
F

F F F
C≡C O C≡C O
F

C≡C C≡C F

C≡C C≡C C≡C C≡C C≡C C≡C
F F
CN CN
F F
F F
F F
F F F F
F F
F F
F F F F
F CN F CN
F CN F CN
F F
O O
O O
F

C≡C C≡C CN CN F Cl F Cl F F F F F F F F F F O F O F F F F F F F F O F O

C≡C CN
F C≡C Cl
F C≡C F
F C≡C
F C≡C
F C≡C O
F C≡C CN
F C≡C F
F C≡C
F C≡C

$CF_3$ C•C O

$F_3C$ F C•C O

$CF_3$ C•C CN

$CF_3$ F C•C Cl

$CF_3$ F C•C CN

$CF_3$ F C•C F

$CF_3$ F C•C CN F

$CF_3$ F C•C

$CF_3$ F C•C

$CF_3$ F C•C

$CF_3$ F C•C

$CF_3$ F C•C O

$CF_3$ F C•C O

$CF_3$ F C•C Cl

$CF_3$ F C•C Cl

$CF_3$ F C•C F

$CF_3$ F C•C F

$CF_3$ F C•C

$CF_3$ F C•C

EXAMPLE 1-2

Of a liquid crystal composition obtained by adding 5 parts by mass of (R)-1-[4-[2-(4-chloro-2-fluorophenyl)ethinyl]phenyl]-2-phenylpropane (hereinafter referred to as compound A) to 95 parts by mass of a liquid crystal composition ZLI-1565 manufactured by Merck Ltd., the clear point (Tc, unit: °C) and the dynamic viscosity (η, 25°C, unit: cSt) were measured, and the results are shown in Table 1-1.

Of a liquid crystal composition obtained by adding 20 parts by mass of the compound A to 80 parts by mass of the liquid crystal composition ZLI-1565 manufactured by Merck Ltd., the refractive index (no) to ordinary ray and the refractive index ($n_e$) to extraordinary ray were measured by means of an Abbe refractometer, and the refractive index anisotropy (Δn, 589 nm, 25°C) was calculated from the following formula. The result is shown in Table 1-1.

$$n_0 = [(n_{\parallel}^2 + n_{\perp}^2)/2]^{1/2}$$

$$n_e = n_{\perp}$$

$$\Delta n = n_{\parallel} - n_{\perp}$$

Of a liquid crystal composition obtained by adding 1 part by mass of the compound A to 100 parts by mass of the liquid crystal composition ZLI-1565 manufactured by Merck Ltd., the helical pitch length (P, 25°C, unit: μm) was measured. The result is shown in Table 1-1.

Here, the liquid crystal composition ZLI-1565 manufactured by Merck Ltd. had Tc of 86.0°C, Δn of 0.124 and η of 15.7 cSt.

EXAMPLE 1-3

The same operation as in Example 1-2 was carried out except that (R)-1-[4-[2-(3,4-difluorophenyl)ethinyl] phenyl]-2-phenylpropane was used instead of (R)-1-[4-[2-(4-chloro-2-fluorophenyl)ethinyl]phenyl]]-2-phenylpropane to obtain liquid crystal compositions, and of the respective liquid crystal compositions, the clear point (Tc, unit: °C), the dynamic viscosity (η, 25°C, unit: cSt), the refractive index anisotropy (Δn, 589 nm, 25°C) and the helical pitch length (P, 25°C, unit: μm) were measured. The results are shown in Table 1-1.

COMPARATIVE EXAMPLE 1-1

The same operation as in Example 1-2 was carried out except that R-811 (the structure has already been described) was used instead of (R)-1-[4-[2-(4-chloro-2-fluorophenyl)ethinyl]phenyl]]-2-phenylpropane to obtain liquid crystal compositions, and of the respective liquid crystal compositions, the clear point (Tc, unit: °C), the dynamic viscosity (η, 25°C, unit: cSt), the refractive index anisotropy (Δn, 589 nm, 25°C) and the helical pitch length (P, 25°C, unit: μm) were measured. The results are shown in Table 1-1.

Table 1-1

| Liquid crystal composition | Tc | Δn | η | p |
|---|---|---|---|---|
| Example 1-2 | 81.2 | 0.139 | 21.8 | 7.09 |
| Example 1-3 | 78.7 | 0.128 | 22.2 | 6.85 |
| Comparative Example | 79.5 | 0.115 | 22.2 | 10.40 |

INDUSTRIAL APPLICABILITY

The liquid crystal composition containing the optically active compound of the present invention is a composition novel prior to filing of the present application, and is a liquid crystalline compound, and further, is useful as an optically active compound to be added to the above liquid crystal composition. Namely, it has a high helical twisting power, it provides a small helical pitch length induced, and at the same time, it has a low viscosity, and a liquid crystal element employing the liquid crystal composition of the present invention may have a.high speed of response. Further, the liquid crystal composition employing the liquid crystal composition of the present invention has a high refractive index anisotropy (Δn), an extremely high transition temperature (Tc) from the liquid crystal phase to the isotropic phase, and has a low viscosity. Further, it is chemically stable, and is excellent in compatibility with another compound such as another liquid

crystal or non-liquid crystal compound. Further, the liquid crystal composition employing the optically active compound of the present invention has such a characteristic that it has a high dielectric anisotropy ($\Delta\varepsilon$), and may be driven at a low voltage.

Accordingly, the addition amount of such an optically active compound is small when it is added to a liquid crystal composition, and thus substantially no increase in the viscosity, decrease in the speed of response, increase in the driving voltage or reduction of the operating temperature range will be caused. At the same time, substantially no decrease in Tc of the liquid crystal composition will be caused, and accordingly a liquid crystal electro-optical element can be driven even at a high temperature range.

Particularly, such an optically active compound having the above characteristics is extremely effective even by addition of a small amount when used for a cholesteric liquid crystal composition to which addition of a large amount of an optically active compound is required, and which is usually considered to have a low speed of response and a high driving voltage, and a liquid crystal display element having brightness and a high contrast can be obtained.

Further, when the liquid crystal composition containing the optically active compound of the present invention is employed to obtain a TN or STN liquid crystal display element, uniform twist alignment can be achieved, and when it is used for a reflective cholesteric liquid crystal element, an aimed reflection wavelength will be obtained.

Further, the liquid crystal composition containing the optically active acetylene derivative compound of the present invention may also be used for various modes such as an active matrix element, a polymer dispersion liquid crystal element, a GH liquid crystal element employing a polychromatic colorant and a ferroelectric liquid crystal element. Further, it may also be used for applications other than for display, such as a dimmer element, a dimmer window, an optical shutter, a polarization exchange element, a varifocal lens, an optical color filter, a colored film, an optical recording element and a temperature indicator.

## Claims

**1.** A liquid crystal composition containing at least an optically active compound of the following formula (1) (C* is asymmetric carbon):

(1) $R^1\text{-}A^1\text{-}C^{\ddagger}HX^1\text{-}Y^1\text{-}A^2\text{-}(Z^1\text{-}A^3)_mC{\equiv}C\text{-}A^4\text{-}(Z^2\text{-}A^5)_n\text{-}R^2$

wherein $A^1$ is a non-substituted 1,4-phenylene group, a 1,4-phenylene group substituted with at least one halogen atom or a non-substituted 2,6-naphthylene group,
each of $A^2$, $A^3$, $A^4$ and $A^5$ which are independent of one another, is a non-substituted 1,4-phenylene group, a 1,4-phenylene group substituted with at least one halogen atom or a non-substituted trans-1,4-cyclohexylene group,
each of $R^1$ and $R^2$ which are independent of each other, is a $C_{1-10}$ aliphatic hydrocarbon group, a $C_{1-10}$ aliphatic hydrocarbon group substituted with at least one halogen atom, a hydrogen atom, a halogen atom or a cyano group, provided that in a case of a $C_{1-10}$ aliphatic hydrocarbon group or a $C_{1-10}$ aliphatic hydrocarbon group substituted with at least one halogen atom, an ethereal oxygen atom (-O-) may be inserted in the carbon-carbon linkage in the group or the carbon-carbon linkage connecting the group and the ring,
$X^1$ is -F, $-CH_3$, $-CH_2F$, $-CHF_2$ or $-CF_3$,
$Y^1$ is $-CH_2-$ or -CO-,
each of $Z^1$ and $Z^2$ which are independent of each other, is -COO-, -OCO-, $-CH_2O-$, $-OCH_2-$, $-CH_2CH_2-$, $-C{\equiv}C-$, -CF=CF-or a single bond, and
each of m and n which are independent of each other, is 0 or 1.

**2.** The liquid crystal composition according to Claim 1, which contains an optically active acetylene derivative compound of the formula (1) wherein $X^1$ is -F, $-CH_3$ or $-CF_3$, and $Y^1$ is $-CH_2-$ or -CO-.

**3.** The liquid crystal composition according to Claim 1 or 2, which contains an optically active acetylene derivative compound of the formula (1) wherein when m=1, each of $A^3$ and $A^4$ which are independent of each other, is a non-substituted 1,4-phenylene group or a 1,4-phenylene group substituted with at least one halogen atom, and when m=0; each of $A^2$ and $A^4$ which are independent of each other, is a non-substituted 1,4-phenylene group or a 1,4-phenylene group substituted with at least one halogen atom.

**4.** A liquid crystal electro-optical element, which comprises the liquid crystal composition as defined in any one of Claims 1 to 3 disposed between substrates having an electrode.

## Patentansprüche

1. Flüssigkristallzusammensetzung, welche mindestens eine optisch aktive Verbindung der folgenden Formel (1) (C ist ein asymmetrisches Kohlenstoffatom) enthält:

$$(1)\qquad R^1\text{-}A^1\text{-}C^*HX^1\text{-}Y^1\text{-}A\text{-}^2(Z^1\text{-}A^3)_m\text{-}C\equiv C\text{-}A^4(Z^2\text{-}A^5)_n\text{-}R^2$$

wobei $A^1$ eine nicht-substituierte 1,4-Phenylengruppe, eine mit mindestens einem Halogenatom substituierte 1,4-Phenylengruppe oder eine nicht-substituierte 2,6-Naphthylengruppe ist,
jedes von $A^2$, $A^3$, $A^4$ und $A^5$, welche voneinander unabhängig sind, eine nicht-substituierte 1,4-Phenylengruppe, eine mit mindestens einem Halogenatom substituierte 1,4-Phenylengruppe oder eine nicht-substituierte trans-1,4-Cyclohexylengruppe ist,
jedes von $R^1$ und $R^2$, welche voneinander unabhängig sind, eine $C_{1-10}$-aliphatische Kohlenwasserstoffgruppe, eine mit mindestens einem Halogenatom substituierte $C_{1-10}$-aliphatische Kohlenwasserstoffgruppe, ein Wasserstoffatom, ein Halogenatom oder eine Cyanogruppe ist, mit der Maßgabe, daß in einem Fall einer $C_{1-10}$-aliphatischen Kohlenwasserstoffgruppe oder einer mit mindestens einem Halogenatom substituierten $C_{1-10}$-aliphatischen Kohlenwasserstoffgruppe ein etherisches Sauerstoffatom (-O-) in die Kohlenstoff-Kohlenstoff-Verknüpfung in der Gruppe oder in der Kohlenstoff-Kohlenstoff-Verknüpfung, welche die Gruppe und den Ring verbindet, insertiert sein kann,
$X^1$ -F, $-CH_3$, $-CH_2F$, $-CHF_2$ oder $-CF_3$ ist,
$Y^1$ $-CH_2-$ oder -CO- ist,
jedes von $Z^1$ und $Z^2$, welche voneinander unabhängig sind, -COO-, -OCO-,- $CH_2O$-, $-OCH_2-$, $-CH_2CH_2-$, $-C\equiv C-$, -CF=CF- oder eine Einfachbindung ist, und jedes von m und n, welche voneinander unabhängig sind, 0 oder 1 ist.

2. Flüssigkristallzusammensetzung nach Anspruch 1, welche eine optisch aktive Acetylenderivatverbindung der Formel (1) enthält, wobei $X^1$ -F, $-CH_3$ oder $-CF_3$ ist und $Y^1$ $-CH_2-$ oder -CO- ist.

3. Flüssigkristallzusammensetzung nach Anspruch 1 oder 2, welche eine optisch aktive Acetylenderivatverbindung der Formel (1) enthält, wobei, wenn m=1, jedes von $A^3$ und $A^4$, welche voneinander unabhängig sind, eine nicht-substituierte 1,4-Phenylengruppe oder eine mit mindestens einem Halogenatom substituierte 1,4-Phenylengruppe ist, und, wenn m=0, jedes von $A^2$ und $A^4$, welche voneinander unabhängig sind, eine nicht-substituierte 1,4-Phenylengruppe oder eine mit mindestens einem Halogenatom substituierte 1,4-Phenylengruppe ist.

4. Elektrooptisches Flüssigkristallelement, welches die Flüssigkristallzusammensetzung nach einem der Ansprüche 1 bis 3, angeordnet zwischen Substraten mit einer Elektrode, umfaßt.

## Revendications

1. Composition de cristaux liquides contenant au moins un composé optiquement actif de formule (I) suivante (C* est un carbone asymétrique) :

$$(1)\qquad R^1\text{-}A^1\text{-}C^*HX^1\text{-}Y^1\text{-}A^2\text{-}(Z^1\text{-}A^3)_m\text{-}C\equiv C\text{-}A^4\text{-}\ (Z^2\text{-}A^5)_n\text{-}R^2$$

dans laquelle $A^1$ est un groupe 1,4-phénylène non substitué, un groupe 1,4-phénylène substitué par au moins un atome d'halogène ou un groupe 2,6-naphtylène non substitué,
chacun de $A^2$, $A^3$, $A^4$ et $A^5$ qui sont indépendants les uns des autres, est un groupe 1,4-phénylène non substitué, un groupe 1,4-phénylène substitué par au moins un atome d'halogène ou un groupe trans-1,4-cyclohexylène non substitué,
chacun de $R^1$ et $R^2$, qui sont indépendants l'un de l'autre, est un groupe hydrocarboné aliphatique en $C_{1-10}$, un groupe hydrocarboné aliphatique en $C_{1-10}$ substitué par au moins un atome d'halogène, un atome d'hydrogène, un atome d'halogène ou un groupe cyano, avec la réserve que dans le cas d'un groupe hydrocarboné aliphatique en $C_{1-10}$ ou d'un groupe hydrocarboné aliphatique en $C_{1-10}$ substitué par au moins un atome d'halogène, un atome d'oxygène d'éther (-O-) peut être inséré dans la liaison carbone-carbone du groupe ou dans la liaison carbone-carbone reliant le groupe et le cycle,
$X^1$ est -F, $-CH_3$, $-CH_2F$, $-CHF_2$ ou $-CF_3$,
$Y^1$ est $-CH_2-$ ou -CO-,
chacun de $Z^1$ et $Z^2$ qui sont indépendants l'un de l'autre, est -COO-, -OCO-, $-CH_2O-$, $-OCH_2-$, $-CH_2CH_2-$, -C=C-, -CF=CF-, ou une liaison simple, et

chacun de m et n, qui sont indépendants l'un de l'autre, est 0 ou 1.

2. Composition de cristaux liquides selon la revendication 1, qui contient un composé dérivé d'acétylène optiquement actif de formule (1) dans laquelle $X^1$ est -F, $-CH_3$ ou $-CF_3$, et $Y^1$ est $-CH_2$- ou -CO-.

3. Composition de cristaux liquides selon la revendication 1 ou 2, qui contient un composé dérivé d'acétylène optiquement actif de formule (1) dans laquelle m = 1, chacun de $A^3$ et $A^4$, qui sont indépendants l'un de l'autre, est un groupe 1,4-phénylène non substitué ou un groupe 1,4-phénylène substitué par au moins un atome d'halogène, et quand m = 0, chacun de $A^2$ et $A^4$, qui sont indépendants l'un de l'autre, est un groupe 1,4-phénylène non substitué ou un groupe 1,4-phénylène substitué par au moins un atome d'halogène.

4. Elément électro-optique à cristaux liquides, qui comprend la composition de cristaux liquides telle que définie dans l'une quelconque des revendications 1 à 3 disposée entre des substrats ayant une électrode.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11255675 A
- JP 10251185 A
- EP 0311329 A
- EP 0315193 A
- US 5209867 A
- EP 0217354 A
- JP 8245960 A
- WO 9514067 A
- JP 5170679 A